# DEMANDE DE BREVET EUROPEEN

(11) **EP 0 884 088 A1**
(43) Date de publication de la demande: **16.12.1998**
(21) Numéro de dépôt: 98401364.9
(22) Date de dépôt: 08.06.1998
(51) Int. Cl.: B01D 53/053, B01D 53/047

(54) **Dispositif et procédé de séparation d'un mélange gazeux par adsorption à variation de pression**

(30) Priorité: 09.06.1997 FR 9707117
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Petit, Pierre, 91370 Verrieres-Le-Buisson (FR); Andreani, Philippe, Québec H4A 2R8 (CA); Monereau, Christian, 75011 Paris (FR)
(74) Mandataire: Le Moenner, Gabriel

(57) **Abrégé**

Le dispositif comprend un adsorbeur (1) et trois capacités de sortie (2-4), des premiers (8,9) et seconds (10,11) moyens pour établir une communication bidirectionnelle entre l'adsorbeur et les capacités d'élution (2) et de repressurisation (3), respectivement, et des troisièmes moyens (14A,15;16) pour établir une communication unidirectionnelle de l'adsorbeur vers la capacité de production (4).

## Description

La présente invention concerne les dispositifs PSA de séparation d'un mélange gazeux comprenant un adsorbeur et au moins une capacité de sortie.

Les PSA mono-adsorbeur comportent généralement une seule capacité, simple ou du type dit à ségrégation, ou deux capacités, également simples ou du type dit à ségrégation. Des exemples sont décrits notamment dans US-4 561 865 (Greene & Kellogg), US-4 948 391 (Vacuum Optics Corp.), US-4 892 566 (Air Sep. Corp.), US-5 370 728 (Praxair), US-5 415 683 (Praxair), US-5 565 018 (Praxair), EP 663 229 (Sumitomo Seika), EP 743 087 (L'Air Liquide). Les solutions avec une seule capacité sont avantageuses au niveau des coûts de l'équipement mais n'autorisent pas une optimisation du cycle ni des volumes de gaz à stocker. Les solutions à capacités du type à ségrégation permettent de telles optimisations mais au prix de coûts très élevés.

La présente invention a pour objet de proposer un dispositif et un procédé PSA de séparation permettant de telles optimisations à moindre coût.

Pour ce faire, selon un aspect de l'invention, le dispositif comprend :
- un adsorbeur ayant une entrée d'alimentation en mélange gazeux et une sortie de gaz;
- une première, deuxième et troisième capacités, la troisième capacité ayant une entrée et une sortie de gaz;
- des premiers moyens pour établir une communication bidirectionnelle entre la sortie de l'adsorbeur et la première capacité;
- des deuxièmes moyens pour établir une communication bidirectionnelle entre la sortie de l'adsorbeur et la deuxième capacité; et
- des troisièmes moyens pour établir une communication uni-directionnelle de la sortie de l'adsorbeur vers la troisième capacité.

Selon un autre aspect de l'invention, le procédé de mise en oeuvre d'un tel dispositif, comprend des étapes successives de production, de dépressurisation, d'élution et de recompression, où :
- dans l'étape de production, le gaz produit à la sortie de l'adsorbeur est acheminé par les deuxièmes moyens à la deuxième capacité et par les troisièmes moyens à la troisième capacité;
- lors de l'étape de dépressurisation, du gaz est acheminé de la sortie de l'adsorbeur par les premiers moyens à la première capacité; et
- du gaz des premières et deuxièmes capacités est acheminé séquentiellement par les premiers et deuxièmes moyens, respectivement vers la sortie de l'adsorbeur lors des étapes d'élution et de recompression.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique d'un dispositif PSA mono-adsorbeur à trois capacités selon l'invention;
- les figures 2 et 3 sont des exemples de cycle selon l'invention

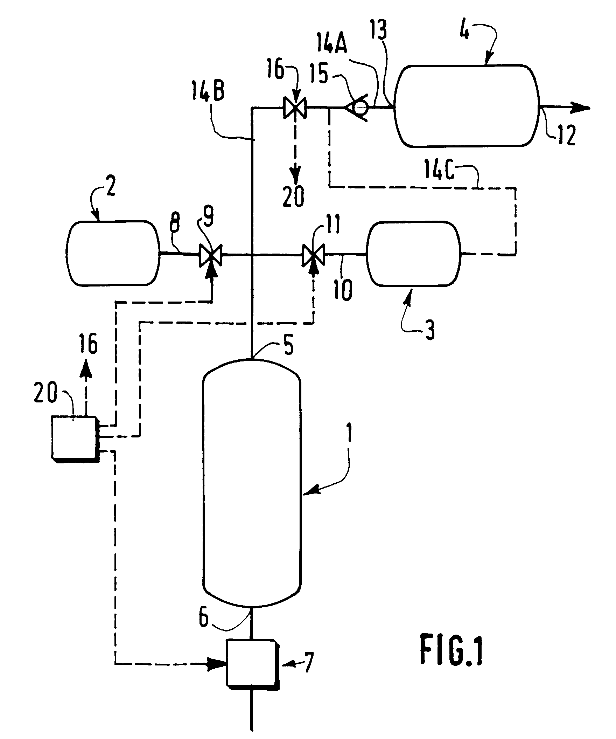

Sur la figure 1 on reconnaît un dispositif PSA de séparation d'un mélange gazeux, typiquement pour la production d'oxygène à partir d'air atmosphérique, comprenant un adsorbeur 1 et trois capacités de sortie 2, 3 et 4 connectables respectivement à la sortie 5 de l'adsorbeur 1, comme on le verra plus avant. L'entrée 6 de l'adsorbeur 1 est reliée à une unité 7 de compression/aspiration à vannages de dérivation comme décrit dans US-4 561 865 sus-mentionné ou à machine tournante inversible, comme décrit dans EP 743 087 sus-mentionné.

La première capacité 2 est reliée à la sortie 5 par une ligne 8 comportant une vanne 9. La deuxième capacité 3 est reliée à la sortie 5 par une ligne 10 munie d'une vanne 11.

La troisième capacité 4 comporte une sortie 12, ou sortie de production, raccordable à un circuit utilisateur, et une entrée 13 raccordable à la sortie 5 de l'adsorbeur 1. Dans le mode de réalisation représenté en traits pleins sur la figure 1, l'entrée 13 est reliée à la sortie 5 par un premier tronçon 14A muni d'un clapet anti-retour 15 puis par un deuxième tronçon 14B. Le dispositif comporte en outre des moyens 20 programmables de commande séquentielle des premier (9) et deuxième (11) moyens de communication et de l'unité 7.

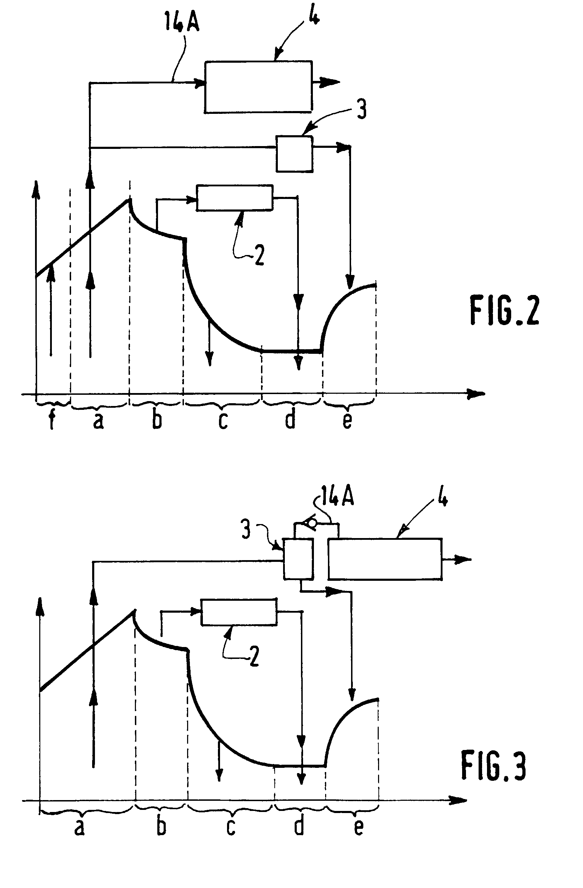

Le fonctionnement de ce dispositif va maintenant être décrit en relation avec la figure 2 illustrant les phases du cycle PSA.

Comme on le voit sur cette figure 2, le cycle comprend
- a) une phase de production où le système 7 adresse à l'adsorbeur 1 un flux de pression de mélange gazeux à séparer, le gaz de production séparé étant acheminé aux deuxième et troisième capacités 3 et 4 (la vanne 11 étant ouverte et la vanne 9 fermée).
- b) une étape où l'adsorbeur précédemment en phase de production a) subit une première depréssurisation à co-courant, le gaz séparé à pureté déclinente étant acheminé au premier réservoir 2 (la vanne 9 étant ouverte et la vanne 11 fermée). La pression dans cette phase étant inférieure à la pression atteinte en fin de phase de production, le clapet anti-retour 15 reste fermé et le gaz de dépressurisation n'atteint pas la capacité de production 4.
- c) une phase de dépressurisation à contre-courant jusqu'à la pression basse du cycle, assistée par le système 7 fonctionnant en pompe.
- d) une phase d'élution à la pression basse du cycle par du gaz de pureté moyenne provenant de la première capacité 2 (la vanne 9 étant ré-ouverte).
- e) une phase initiale de représsurisation à co-courant par du gaz de bonne pureté provenant de la deuxième capacité 3 (la vanne 11 étant ouverte et la vanne 9 étant fermée), le clapet 15 empêchant tout retour du gaz dans la capacité 4 vers une zone à pression plus basse.
- f) une seconde phase de pressurisation par le mélange gazeux à séparer, sans extraction de gaz de production.

Un tel agencement permet de réduire les dimensions des capacités de stockage tout en autorisant une séquence élution/représsurisation par du gaz séparé à pureté croissante.

En variante, la ligne 14B peut comporter, en sus de ou en place du clapet 15, une troisième électro-valve 16 commandée par les moyens de commande 20 pour, lors de la phase de production a), adresser le gaz de production séquentiellement tout d'abord à la capacité 3 seule et in fine à la capacité 4 seule, la vanne 16 étant maintenue fermée en dehors de l'étape a).

En variante, encore, comme représenté en pointillés sur la figure 1, le tronçon aval 14A incorporant le clapet 15 peut être relié à la sortie 5, non pas directement mais via la deuxième capacité 3 et sa ligne de raccordement 10 (la portion de ligne 14B est dans ce cas supprimée).

Sur la figure 3 on a représenté le cycle transposé de celui de la figure 2 avec cette dernière variante de réalisation.

En phase de production a) tout le gaz de production est acheminé à la petite deuxième capacité 2 puis, de là, à la troisième capacité 4. En phase e), à l'ouverture de la vanne 11, le gaz contenu dans la deuxième capacité 3 revient vers l'adsorbeur 1 pour sa repressurisation initiale à contre-courant, le clapet 15 empêchant tout retour vers l'amont du gaz de production dans la troisième capacité 4.

En variante, le cycle représenté sur la figure 3 ne comporte pas d'étape intermédiaire f) de repressurisation par le seul mélange gazeux à séparer, la phase a) de production, avec la vanne 11 ouverte, enchaînant directement sur la phase de repressurisation initiale e).

Quoique la présente invention ait été décrite en relation avec des modes de réalisation particuliers, elle ne s'en trouve pas limitée mais au contraire susceptible de modifications et de variantes qui apparaîtront à l'homme de l'art.

## Revendications

1. Dispositif PSA de séparation d'un mélange gazeux, comprenant :
- un adsorbeur (1) ayant une entrée (6) d'alimentation en mélange gazeux et une sortie (5) de gaz;
- une première (2), deuxième (3) et troisième (4) capacités, la troisième capacité (4) ayant une entrée (13) et une sortie (12) de gaz;
- des premiers moyens (8,9) pour établir une communication bi-directionnelle entre la sortie (5) de l'adsorbeur (1) et la première capacité (2);
- des deuxièmes moyens (10,11) pour établir une communication bi-directionnelle entre la sortie de l'adsorbeur et la deuxième capacité (3); et
- des troisièmes moyens (14B; 14A,15; 16; 14C) pour établir une communication uni-directionnelle de la sortie de l'adsorbeur vers la troisième capacité (4).

2. Dispositif selon la revendication 1, comprenant en outre des moyens (20) de commande des premiers et deuxièmes moyens d'établissement de communication pour actionner successivement les premiers moyens puis les deuxièmes moyens.

3. Dispositif selon la revendication 1 ou la revendication 2, comprenant des moyens (20) de commande des deuxièmes et troisièmes moyens d'établissement de communication pour actionner séquentiellement les deuxièmes et troisièmes moyens.

4. Procédé PSA de séparation d'un mélange gazeux dans un dispositif selon l'une des revendications 1 à 3, comprenant des étapes successives de production, de dépressurisation, d'élution et de recompression, dans lequel :
- dans l'étape de production (a), le gaz produit à la sortie (5) de l'adsorbeur (1) est acheminé par les deuxièmes moyens à la deuxième capacité (3) et par les troisièmes moyens à la troisième capacité (4);
- lors de l'étape de dépressurisation (b), du gaz est acheminé de la sortie (5) de l'adsorbeur (1) par les premiers moyens à la première capacité (2); et
- du gaz des premières et deuxièmes capacités est acheminé séquentiellement par les premiers et deuxièmes moyens, respectivement, vers la sortie de l'adsorbeur lors des étapes d'élution (d) et de recompression (e)

5. Procédé selon la revendication 4, caractérisé en ce que l'étape de dépressurisation comporte une étape finale de dépressurisation (c) à contre-courant jusqu'à la pression basse de cycle

6. Procédé selon la revendication 4 ou la revendication 5, caractérisé en ce qu'il comporte une étape intermédiaire (f) de représsurisation à co-courant par le seul mélange gazeux à séparer.

7. Procédé selon la revendication 5 ou la revendication 6, caractérisé en ce que l'étape finale de dépressurisation (c) succède à l'étape de dépressurisation (b) vers la première capacité.

8. Procédé selon l'une des revendications 4 à 7, caractérisé en ce que le mélange gazeux est l'air.
